# DEMANDE DE BREVET EUROPEEN

(11) **EP 0 694 717 A1**
(43) Date de publication de la demande: **31.01.1996**
(21) Numéro de dépôt: 95420190.1
(22) Date de dépôt: 06.07.1995
(51) Int. Cl.: F16J 15/06

(54) **Joint d'étanchéité, notamment joint de culasse ou joint de collecteur**

(30) Priorité: 22.07.1994 FR 9409328
(71) Demandeur: CURTY PAYEN S.A., F-69800 Saint-Priest, Rhône (FR)
(72) Inventeur: Jargeaix, Gérard, F-89000 Auxerre (FR)
(74) Mandataire: Maureau, Philippe

(57) **Abrégé**

Dans ce joint d'étanchéité au moins certaines de ses pièces constitutives (3, 8, 15) sont conformées pour ménager au moins une cale d'épaisseur, sur au moins une face du joint, et dans les zones de celui-ci ne servant pas à assurer l'étanchéité.

## Description

La présente invention a pour objet un joint d'étanchéité, notamment joint de culasse ou joint de collecteur.

En sortie de fabrication, les joints sont conditionnés de façon superposée pour former des lots d'un certain nombre de joints qui sont expédiés chez les constructeurs de véhicules ou de machines, ou chez les concessionnaires.

La superposition directe des joints n'est pas satisfaisante car il s'agit de pièces délicates possèdant des zones fragiles au niveau desquelles il convient de ne pas réaliser de contact avec d'autres pièces.

En outre, lorsque des joints sont superposés, il risque de se produire un collage mécanique entre les pièces, résultant notamment de la présence de film d'huile, ce qui rend plus difficile la manipulation des pièces une par une et peut, éventuellement, se traduire par le montage sur le véhicule ou sur la machine à équiper de deux joints collés l'un contre l'autre, avec les conséquences dommageables que cela peut avoir.

Pour remédier à ces inconvénients, il est connu d'utiliser des protections intermédiaires, telles que des emballages unitaires à base de papier ou des feuilles intercalaires ou similaires, qui occasionnent une perte de temps lors du conditionnement, une perte de temps lors du déballage des joints, avec, enfin, le problème du recyclage de ces protections, ou de leur destruction devenue maintenant obligatoire.

Le but de l'invention est de remédier à ces inconvénients en fournissant un joint dont la structure permet son stockage avec superposition d'autres joints de même nature, tout en maintenant un espace entre ces joints, sans que le ménagement de cet espace occasionne une perte de temps aux opérateurs lors du conditionnement, et sans nécessiter un emballage spécifique.

A cet effet, dans le joint d'étanchéité qu'elle concerne, au moins certaines de ses pièces constitutives sont conformées pour ménager au moins une cale d'épaisseur, sur au moins une face du joint, et dans les zones de celui-ci ne servant pas à assurer l'étanchéité.

Lorsque plusieurs joints sont superposés, l'appui d'un joint sur un autre joint se fait par l'intermédiaire de la cale d'épaisseur sur la partie principale du joint adjacent, ou sur une cale d'épaisseur de ce joint adjacent. Etant donné que les cales d'épaisseur sont localisées en dehors des zones des joints servant à réaliser l'étanchéité, ces zones délicates ne sont absolument pas détériorées par l'appui des joints les uns sur les autres.

L'intérêt essentiel de l'invention est de réaliser sur les joints des cales d'épaisseur intégrées, en profitant du procédé d'élaboration des joints et de la forme de ceux-ci.

Suivant une première forme d'exécution, chaque cale d'épaisseur est constituée par un bossage obtenu par déformation mécanique.

Cette solution peut être envisagée dans le cas d'un joint monocouche, par exemple métallique, ainsi que dans le cas de joints multicouches.

Suivant une possibilité, dans ce cas, chaque bossage est ménagé par déformation de l'âme du joint.

Suivant une autre possibilité, dans le même cas, et lorsqu'il s'agit d'un joint dans lequel l'âme du joint est recouverte, sur ses deux faces et au moins partiellement par deux plaques, constitutives par exemple des anneaux de feu d'un joint de culasse, l'une des plaques comporte des languettes recouvrant le creux délimité par chaque bossage, tandis que l'autre plaque comporte des évidements laissant le passage des bossages.

Avantageusement, dans ce dernier cas, les deux plaques disposées contre les deux faces de l'âme du joint sont identiques, les bossages ménagés sur l'âme de part et d'autre du plan médian longitudinal de celle-ci étant décalés axialement, tandis que les plaques, disposées contre les deux faces de l'âme comportant des languettes possèdant le même décalage, sont montées en sens inverse l'une de l'autre.

Suivant une autre forme d'exécution, dans le cas d'un joint multicouches, chaque bossage est ménagé dans une plaque recouvrant, au moins partiellement, l'une des faces de l'âme du joint.

Selon encore une autre forme d'exécution, applicable notamment à un joint monocouche, chaque cale d'épaisseur est obtenue par un repli de la matière constitutive du joint, en dehors des zones de contact ou d'appui sur la surface de montage du joint.

Dans la mesure où un joint d'étanchéité est équipé d'au moins un cordon en matière synthétique, chaque cale d'épaisseur est obtenue par moulage ou surmoulage d'une matière synthétique.

Ainsi, les cales d'épaisseur peuvent être obtenues au cours de la même opération de moulage ou de surmoulage du joint en matière synthétique.

Suivant encore une autre forme d'exécution, chaque cale d'épaisseur est constituée par un rivet ou similaire traversant ou non une ouverture ménagée à cet effet dans le joint, le rivet ou similaire pouvant éventuellement servir à l'assemblage du joint.

De toute façon, l'invention sera bien comprise à l'aide de la description qui suit, en référence au dessin schématique annexé représentant, à titre d'exemples non limitatifs, plusieurs formes d'exécution de ce joint :
Figure 1 est une vue en plan, très schématique, d'un joint de culasse pour moteur à explosition ;
Figure 2 est une vue en plan, très schématique et partielle, d'un joint de collecteur ;

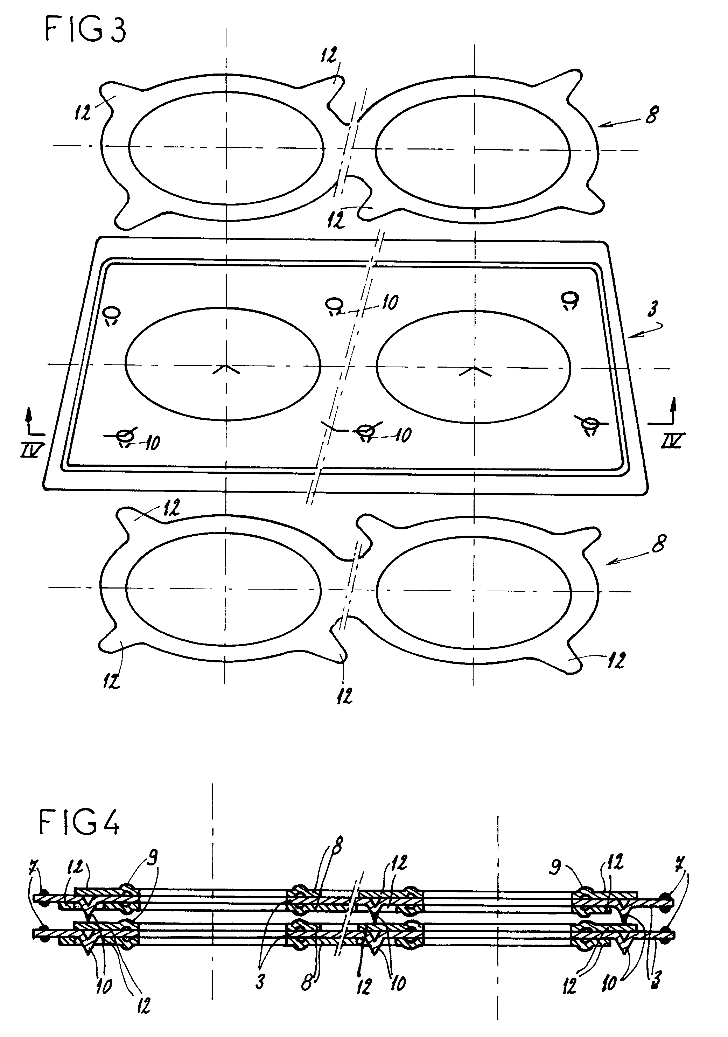

Figure 3 est une vue en perspective éclatée d'un tronçon du joint de figure 1;
Figure 4 est une vue en coupe longitudinale du joint de figure 3, selon la ligne IV-IV de figure 3 en position superposée avec un autre joint;
Figures 5 et 6 sont deux vues partielles en coupe longitudinale de deux autres formes d'exécution de deux joints de culasse superposés ;
Figure 7 est une vue en coupe longitudinale de deux joints superposés du type de ceux de figures 1 ou 2 ;
Figure 8 est une vue en coupe longitudinale d'une variante des joints de figure 7 ;
Figures 9 et 10 sont deux autres vues en coupe longitudinale de deux autres formes d'exécution d'un joint selon l'invention.

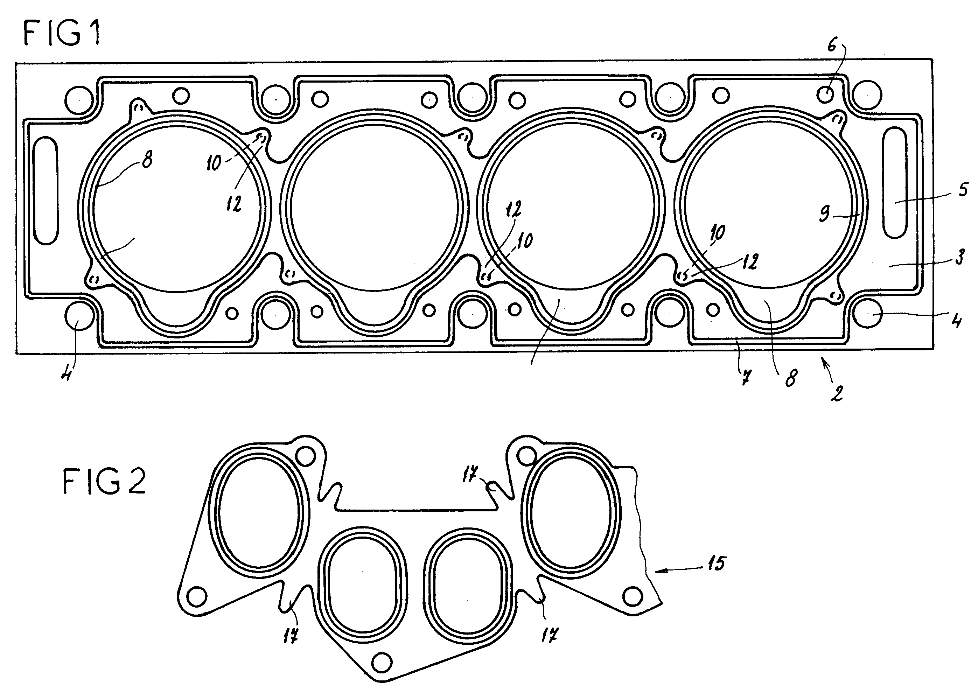

La figure 1 représente un joint de culasse 2 comprenant une couche centrale ou âme 3, par exemple métallique, dans laquelle sont ménagés des orifices 4 pour le serrage du joint entre le bloc moteur et la culasse, des orifices 5 et 6 respectivement pour les passages d'huile et d'eau, avec réalisation d'une étanchéité par un cordon élastomère 7.

Sur les deux faces de l'âme 3 du joint de culasse sont montées des plaques métalliques 8 constitutives notamment des anneaux de feu et présentant, dans la forme d'exécution représentée au dessin, des nervures 9 entourant les différentes chambres de combustion.

Selon la caractéristique essentielle de l'invention, I'âme du joint comporte un certain nombre de bossages 10, obtenus par déformation mécanique, faisant saillie de l'une des faces du joint. Ces bossages 10 forment les cales d'épaisseur permettant de séparer deux joints superposés en position de stockage, transport, etc....

Afin de favoriser le bon écartement entre deux joints, il est avantageux que les bossages 10 d'un joint ne viennent pas s'emboîter dans les creux ménagés par les bossages du joint adjacent. A cet effet, les bossages 10, ménagés dans l'âme 3 du joint, de part et d'autre du plan médian longitudinal, sont décalés axialement, et les plaques 8 comportent des languettes 12 possèdant le même décalage, et sont montées en sens inverse l'une de l'autre.

Il en résulte que les languettes 12 de la plaque 8, disposées contre la face de l'âme 3 opposée à celle dont font saillie les bossages 10, obturent les ouvertures de ces bossages, tandis que les languettes 12, appartenant à la plaque 8 ménagée du côté dont font saillie les bossages, sont décalées par rapport aux bossages et laissent un libre passage à ceux-ci.

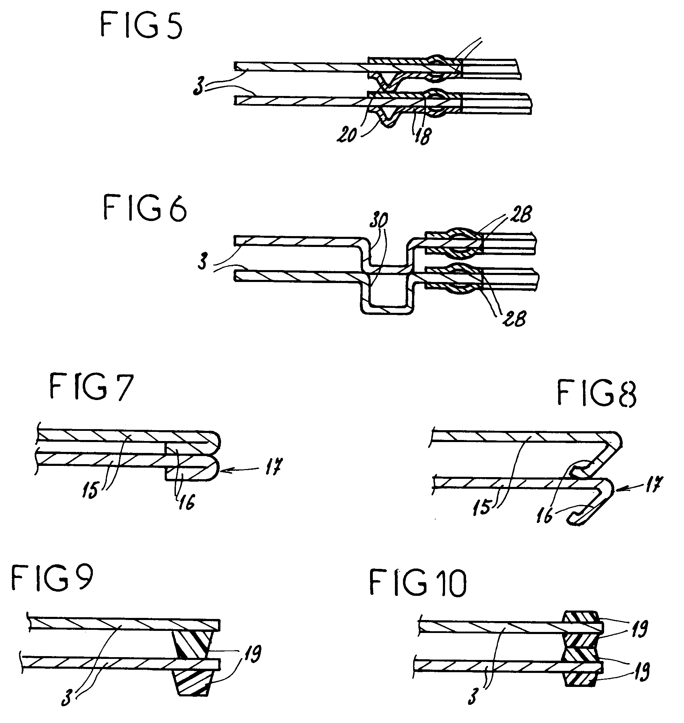

La figure 5 montre une variante d'exécution d'un joint de culasse, représentant deux parties de joint de culasse superposées, dans laquelle des bossages 20 sont ménagés dans l'une des plaques 18, rapportée contre l'une des faces de l'âme 3.

Dans la forme d'exécution représentée à la figure 6, les plaques 28, rapportées de part et d'autre, de l'âme 3 du joint possèdent une structure traditionnelle, et l'âme 3 du joint possède des bossages 30, dont les ouvertures ne sont pas obturées, la forme des bossages évitant leur emboîtement les uns dans les autres lorsque les joints sont superposés.

Les figures 7 et 8 représentent deux autres formes d'exécution de joints applicables plus spécialement à des joints monocouches, tels que, par exemple, le joint de collecteur 15 de figure 2. Dans ce cas, les cales d'épaisseur sont obtenues par des replis de matière 16 ménagés en des emplacements 17 du joint.

Le pli peut être complètement aplati, comme montré à la figure 7, ou plus ouvert, comme montré à la figure 8.

Il serait également possible de disposer d'une languette dont le pli forme un bossage qui est refermé par le bord libre de la languette.

Les figures 9 et 10 montrent des joints dont l'âme 3 est équipée de cales d'épaisseur en matière synthétique moulée, par exemple en même temps que le cordon élastomètre 7. Dans la forme d'exécution de la figure 9, il n'est prévu des cales 19 que sur l'une des deux faces du joint, chaque cale prenant appui, en position de stockage superposée de plusieurs joints, contre l'âme du joint adjacent, tandis que, dans la figure 10, il est prévu des cales d'épaisseur 19 sur les deux faces de l'âme 3 du joint, les cales prenant alors appui les unes contre les autres, lorsque les joints sont en position superposée.

Comme il ressort de ce qui précède, l'invention apporte une grande amélioration à la technique existante, en fournissant des cales d'épaisseur pour joints d'étanchéité, notamment pour joints utilisés dans l'automobile, ces cales étant intégrées aux joints, et étant réalisées au cours du processus de fabrication du joint.

Comme il va de soi, l'invention ne se limite pas aux seules formes d'exécution de ce joint, décrites ci-dessus à titre d'exemples; elle en embrasse, au contraire, toutes les variantes. C'est ainsi notamment que les cales pourraient être réalisées par des rivets traversant des ouvertures ménagées dans le corps du joint lors de la fabrication de celui-ci, sans que l'on sorte pour autant du cadre de l'invention.

## Revendications

**1. -** Joint d'étanchéité, notamment joint de culasse ou joint de collecteur, caractérisé en ce qu'au moins certaines de ses pièces constitutives (3, 8, 15) sont conformées pour ménager au moins une cale d'épaisseur, sur au moins une face du joint, et dans les zones de celui-ci ne servant pas à assurer l'étanchéité.

**2. -** Joint d'étanchéité selon la revendication 1, caractérisé en ce que chaque cale d'épaisseur est constituée par un bossage (10, 20, 30), obtenu par déformation mécanique.

**3. -** Joint d'étanchéité selon la revendication 2, caractérisé en ce que chaque bossage (10, 30) est ménagé par déformation de l'âme (3) du joint.

**4. -** Joint d'étanchéité selon la revendication 3, dans lequel l'âme (3) du joint est recouverte sur ses deux faces et au moins partiellement par deux plaques (8), constitutives par exemple des anneaux de feu d'un joint de culasse, caractérisé en ce que l'une des plaques comporte des languettes (12) recouvrant le creux délimité par chaque bossage (10), tandis que l'autre plaque comporte des évidements laissant le passage des bossages.

**5. -** Joint d'étanchéité selon la revendication 4, caractérisé en ce que les deux plaques (8) disposées contre les deux faces de l'âme (3) du joint sont identiques, les bossages (10) ménagés sur l'âme de part et d'autre du plan médian longitudinal de celle-ci étant décalés axialement, tandis que les plaques (8) disposées contre les deux faces de l'âme comportant des languettes (12) possèdant le même décalage, et sont montées en sens inverse l'une de l'autre.

**6. -** Joint d'étanchéité selon la revendication 2, caractérisé en ce que chaque bossage (20) est ménagé dans une plaque (18) recouvrant, au moins partiellement, l'une des faces de l'âme (3) du joint.

**7. -** Joint d'étanchéité selon la revendication 1, caractérisé en ce que chaque cale d'épaisseur est obtenue par un repli (16) de la matière constitutive du joint, en dehors des zones de contact ou d'appui sur la surface de montage du joint.

**8. -** Joint d'étanchéité selon la revendication 1, caractérisé en ce que chaque cale d'épaisseur (19) est obtenue par moulage ou surmoulage d'une matière synthétique.

**9. -** Joint d'étanchéité selon la revendication 1, caractérisé en ce que chaque cale d'épaisseur est constituée par un rivet ou similaire traversant ou non une ouverture ménagée à cet effet dans le joint.
